# EUROPEAN PATENT SPECIFICATION

(11) **EP 2 803 462 B1**
(45) Date of publication and mention of the grant of the patent: **03.08.2016**
(21) Application number: 14001653.6
(22) Date of filing: 12.05.2014
(51) Int. Cl.: B29C 39/00, B29C 39/10, B29C 39/12, B29C 39/42, B29K 105/00, B29K 83/00, B29C 51/10

(54) **Method for coupling and/or joining a gel with a substrate of a compatible material**
Verfahren zum Kuppeln und/oder Verbinden eines Gels mit einem Substrat eines kompatiblen Materials
Procédé pour coupler et/ou relier un gel avec un substrat d'un matériau compatible

(30) Priority: 13.05.2013 IT PD20130131
(43) Date of publication of application: 19.11.2014
(73) Proprietor: Gel Industry S.R.L., 35010 Peraga di Vigonza PD (IT)
(72) Inventor: Rossi, Enrico Maria, I-35010 Vigonza PD (IT)

(56) References cited:
- EP-A2- 0 433 636
- WO-A1-97/00163
- WO-A2-2009/158560
- DE-A1- 3 336 279
- JP-A- H02 261 935
- JP-A- H02 266 136
- US-A- 5 336 708
- US-A- 5 942 332
- US-A1- 2008 078 028

## Description

The field of this invention concerns a method for creating a bag containing a very soft gel for embellishing various surfaces.

### Prior art

Quite often the need arises to apply a layer of gel, especially a very soft gel, on a suitable support, for example a pillow or a chair.

Indeed, for various reasons, including for example cost, the weight, the structural impossibility, it is not possible to obtain the whole item made of gel.

Said gel, especially if it is very soft, does not have its own compactness and therefore needs to be properly confined to prevent it dispersing.

Another reason why the applications of the gel need to be confined lies in the fact that there are objective difficulties in solidly joining it to the support.

Another reason why said soft gels have to be confined lies in the fact that that they have application limits, which are limits in hardness due to the growing stickiness of the gel as the hardness diminishes and to the loss of mechanical resistance as the hardness diminishes.

The gels that are generally used for the above-mentioned purposes are soft polyurethane or silicone gels.

Currently, therefore, to apply a layer of soft gel, for example polyurethane or silicone gel, with varying degrees of thickness, on any support, it is necessary to confine it, enclosing it in a bag to prevent it dispersing.

The bags containing the above-mentioned gels need to meet various requisites, and in particular they need to meet the requirements of the proposed use.

Many uses that require the application of these soft gels inside bags mean they will come into contact with people.

Because they come into contact with people, in addition to the material that these bags are made of, it is important that the goods, and above all said bags, have particular spatial forms.

Generally, therefore, said bags are thermoformed so that their external appearance can take on the three-dimensional shapes required for their specific use, once they have been applied to the relative support.

Said thermoforming of the bags that provides the required three-dimensional geometric form is carried out using expensive and complicated thermoforming equipment.

After the bag has been thermoformed it is filled with soft gel and joined, using a coupling procedure, to the relative support.

In this way a product is obtained whose specific use takes advantage of the characteristics derived from the coupling of the support and the gel.

Polyurethane or silicone thermoplastic soft gels are used in order to ensure that the three-dimensional geometric configuration of the product maintains its outward appearance over time.

The bag also has a second important function regarding the joint to the relative support.

In the event that polymeric gels are used that have sufficient hardness and no stickiness, the joining to a generic support does not present any big problems.

In fact, to apply a layer of sufficiently compact thermoplastic polymeric gel to a substrate you just have to make a panel or sheet made completely out of the polymeric gel beforehand, and then join it to a foamed or fibrous support and then stick said gel with a fibrous support to the substrate.

But for the particularly soft thermoplastic gels the above-mentioned coupling procedure is not feasible. However, by taking advantage of the properties of the material of the bag containing the thermosetting gel, the adhesion of the gel support-bag using the film of the bag itself is possible.

Therefore the adoption of said bags, both for confining the soft gel used, and also to make it easy to join the gels to the support, is an obligatory step, even if it means additional costs and complications.

As we have already said, the thermoforming of this bag takes place using expensive thermoforming machinery, where very often it is necessary to use a mould in order to quickly obtain the desired three-dimensional configuration.

Also, said moulds have to be appropriately heated all over.

Clearly the cost of these moulds does not justify the investment for a small run or a limited number of pieces with varying shapes.

In addition, the procedure for filling the bag provides that after a wall of the bag has been thermoformed it is extracted from the mould, joined to another sheet and sealed along the edges having filled it with the required soft gel.

Manufacturing times are very long to obtain each item.

### Presentation of the invention

The object of this invention is to make available a method for coupling and/or joining a gel with a substrate of compatible material that overcomes the limitations and drawbacks of the prior art.

A further object of this invention is to make available a method for coupling and/or joining a gel with a substrate of compatible material that is easy to carry out.

Another object of this invention is to make available a method for coupling and/or joining a gel with a substrate of compatible material that can be carried out without expensive thermoforming moulds.

Another object of this invention is to make available a method for coupling and/or joining a gel with a substrate of compatible material that is well-suited also economically for small runs or a limited production of items.

An even further object of this invention is to make available a method for coupling and/or joining a gel with a substrate of compatible material that is produced quickly and with little handling of the item.

### Description of the invention

All the above-described objects are achieved by a production method and by the product obtained directly by said method according to the attached claims.

In particular the invention consists of a method for coupling and/or joining a gel with a substrate of compatible material that involves joining a silicone gel to a sheet of thermoplastic material on a suitable mould, where said gel has been heated to a temperature between 60° and 120°, compatible with softening for deforming said sheet of material and by the fact said gel has a hardness ranging from 5 Sh00 to 5 ShA..

### Beneficial characteristics of the invention

Beneficially, said coupling method can be activated using a casting method (open mould) or else it can be carried out using an injection method (closed mould), without the heating of the mould being necessary or crucial for shaping said thermoplastic film.

Very advantageously, the temperature to which this silicone gel can be brought for the deformation of the sheet of compatible material is preferably between 80° and 100°, without the silicone gel showing any deformation.

Beneficially, said method includes the use of a thermosetting silicone gel, adapting to the thermal deformation of the sheet of compatible material and maintaining and cooperating with this deformation to extend it over time.

A further advantage of this method lies in the fact that it uses a bi-component silicone gel whose speed of reticulation can easily be controlled, for each temperature required by the film for acquiring the three-dimensional form in the time expected.

Beneficially, the above-mentioned method is configured as a cast gel capable of reticulating on a thermoplastic film avoiding the use of a heated mould and/or other sources of softening/heating of the thermoplastic film.

Furthermore, the above-mentioned method is configured as an injection of gel capable of reticulating on a bag shaped by a pair of thermoplastic films without the use of a heated mould.

The technical characteristics of the invention, according to the above-mentioned objects, can be clearly found in the claims below and the benefits will be clearer in the detailed description that follows, made with reference to an example, which represents a form that is provided purely by way of example and in no way restrictive.

### Detailed description

Generally in the prior art for obtaining three-dimensional bags that are then joined to a support, at least one of the thermoformed surfaces is made within a heated mould, and then, after said thermoformed sheet or film has been removed, you make a bag inside which the gel is injected using an injection procedure.

Alternatively, after having thermoformed just one sheet corresponding to just one wall of the bag, it is filled with gel using a cast and then said sheet is closed with another sheet, sealing the perimeter edges and obtaining the relative bag.

Both in the injection procedure and in the casting procedure, you always have to use a hot mould to soften the thermoplastic film, and there is always the use a counter-mould or the application of a vacuum to complete the thermoforming.

In the procedure of the invention the casting or injection is combined with the thermoforming, exploiting the heat of the silicone gel for softening the thermoplastic film and the weight or the injection pressure of this gel to complete the thermoforming.

Therefore in the procedure of the invention it is directly the heat of the silicone gel that softens the thermoplastic film on a specific mould.

Eventually the use of a vacuum accelerates the time needed for obtaining the required deformation of the thermoplastic film.

This temperature nevertheless should not be too high so as not to degrade the structure of the gel, nor too low so that the temperature is insufficient for softening the film.

Moreover, at the desired temperature the gel should quite quickly reticulate so as to be able to manipulate the item and remove it from the mould without compromising the consolidation phase of the reticulation.

Therefore a polyurethane gel is not suitable since it is not compatible with the high temperatures required 80° - 100°.

In fact, at these temperatures it is not possible to control the reaction kinetics of a polyurethane gel, since it lacks inhibitors suitable for the purpose.

Moreover, the above-mentioned reaction kinetics of a polyurethane gel would not have times compatible with the softening times of a thermoplastic film.

For various polyurethane gels, also, too high a temperature might degrade the structure.

Another reason why a polyurethane gel should not be used is the specific field of application that provides for the use of non-toxic materials. Indeed, given the thickness of 50-100 microns, we cannot rule out the risk of the thermoplastic film breaking, so the gel might come into contact with skin.

However, by using a silicone gel you obtain the advantage of a compound that is stable also at high temperatures, which does not degrade, does not release toxic elements and that maintains its reticulation over time.

Advantageously, moreover, the use of a silicone gel provides the user with thermal comfort due to the thermal capacity, providing the feeling of freshness, distributing it inside the layer of gel; It also provides the user with the certainty that if the film breaks he/she will come into contact with a non-toxic material.

### Casting method

The casting method uses an open mould.

Casting requires the silicone gel to be hot, which is cast on a film above a mould that does not require heating to soften the film itself.

Conveniently, said mould could have a vacuum system.

The hot silicone gel softens the thermoplastic film and ensures that both because of the thermal dilation and the weight that acts on the film, it stretches it and ensures that it adapts to the mould, generating the requested three-dimensional shape.

In the eventuality that the mould has a vacuum system, the stretching and mould adaptation process is speeded up, since the vacuum draws the softened film towards the concave parts of the mould under vacuum.

Because of the fact that it does not require heating of the mould to attain the object of the invention with the claimed method, the mould can be made of resin, and not necessarily made of aluminium or other materials that can be heated.

These resin moulds are much cheaper than the standard metal moulds; they are much lighter and easier to handle, as well as easier to produce.

With the claimed method you can also rule out the use of lamps and other systems for heating and softening the film before carrying out the thermoforming, in combination or as an alternative to heated moulds.

Specifically, a preferred method of realisation provides for:
- the heating of the two components of the silicone gel to a temperature of 80°-100° suitable for softening the film;
said components can be heated: in a tank (hermetically sealed), or else using heated pipes to have them flow while they are brought to the mixer, or else heated only when passing through the head of the mixer.
- the positioning of the thermoplastic film on the mould;
- the possible use of a vacuum
- the casting of the hot silicone gel on said film, obtaining a cast of the gel and thermoforming the film together in a single operation. Eventually:
- You cover the surface of the cast with another film and the perimeter edges are sealed airtight to the thermoformed film, obtaining the thermoformed bag filled with the silicone gel.

### Injection method

With this method of injection thermoforming it is necessary to use a mould and counter-mould.

The stages of the method include:
- Insertion of the two thermoplastic films facing each other, where each will form one wall of the bag;
- Closure of the mould
- Heating of the silicone gel
- Injection of the hot silicone gel between the two films
- Demoulding of the already thermoformed bag
- Beneficially, the use of an elastomeric gel with low viscosity allows the thermoforming to happen without using a vacuum system, or if the vacuum is used it helps keep the film in position, which could shift because of the action of a high viscosity gel.
- The closure of the edges of the bag can be carried out using a sealing process, once demoulded, or else the sealing can take place directly in the mould.
- The closed mould process uses more expensive but more efficient moulds for the number of pieces produced.

### Example of gel used

The gel used in the claimed method is a bi-component gel composed of at least one part that contains the Si-H groups, i.e. the groups that form stable bonds, and at least a second part that contains the vinyl groups, with the presence of a catalyst to create the reaction once the two above-mentioned parts are mixed.

The said bi-component gel is thermosetting and reticulates being able to support high working temperatures that create a permanent thermal modification of the thermoplastic film without degrading.

The preferable hardness for production ranges from 120 points of penetration (¼ cone, 22.5 grams. ASTM D5D 217D 937 method) to 80.

### Temperatures for the specific example

The components of this elastomeric gel have to be able to be heated to temperature of 80 °C and 100 °C, without degrading.

The thermoplastic film that could be compatible for use can be of the polyurethane variety, a PVC or a PTE with thicknesses that range from 25 to 150 microns, and preferably from 50 to 100 microns, to be sufficiently wear resistant while at the same time providing the required physical-mechanical properties for the specific use.

It is not advisable to go below these values because of possible wear during use, and the extreme delicacy and fragility of the film, whereas for greater values the film has a loss of the physical-mechanical properties that make the bag unsuitable for the intended use and the envisaged field of application.

This is an extremely simple method for thermoforming that avoids the drawbacks of the prior art.

In particular with the method of the invention we have made available a very inexpensive and feasible method that can be exploited for small production runs.

The use of simple moulds that are not heated makes this method available for niche applications and particular fields that require quick preparations.

In practice we have shown how the invention achieves the task and goals that it has been set.

In particular, with the invention we have made available a method for thermoforming that revolutionises the standard procedure.

In particular, with said method, thermoformed bags of gel are created for applications that were hitherto not possible, both for reasons of cost as well reasons of personal safety, because all the components are harmless, i.e. non-toxic.

## Claims

1. Method for coupling and/or joining a silicone gel with a sheet of thermoplastic material as a substrate of a compatible material, **characterised by** the fact that it joins to the sheet of thermoplastic material arranged on a special mould the silicone gel heated to a temperature between 60° and 120° compatible with softening to deformation of said sheet of thermoplastic material, and by the fact that said gel has a hardness ranging from 5 Sh00 to 5 ShA.

2. Method for coupling and/or joining a gel with a substrate of a compatible material according to claim 1, **characterised by** the fact that it takes place using a casting process with the following steps:
a. Heating of the silicone gel
b. Positioning of the sheet to be thermoformed on the mould
c. Possible use of a vacuum
d. Casting of said heated silicone on said sheet
e. Possible covering of the casting surface with another film and airtight sealing of the perimeter edges with a thermoformed film.

3. Method for coupling and/or joining a gel with a substrate of a compatible material according to claim 1, **characterised by** the fact that it takes place using a casting process with the following steps:
a. Insertion of two thermoplastic films between the mould and counterproof, each one of which will form a wall of the pocket
b. Closure of the mould
c. Heating of the silicone gel
d. Possible use of a vacuum
e. Injection of the hot silicone gel between the two films
f. Possible closure of the edges of the two films
g. Demoulding of the already thermoformed pocket
h. Possible closing of the edges of the pocket by sealing.

4. Method for coupling and/or joining a gel with a substrate of a compatible material according to one or more of the previous claims, **characterised by** the fact said gel has a hardness of between 120 points of penetration ( ¼ cone, 22.5 grams.ASTM D5D 217D 937 method) and 80.

5. Method for coupling and/or joining a gel with a substrate of a compatible material according to one or more of the previous claims, **characterised by** the fact said temperature is between 80° and 100°.

6. Method for coupling and/or joining a gel with a substrate of a compatible material according to one or more of the previous claims, **characterised by** the fact said silicone gel is of the thermosetting variety.

7. Method for coupling and/or joining a gel with a substrate of a compatible material according to one or more of the previous claims, **characterised by** the fact said silicone gel is of the bicomponent variety.

8. Method for coupling and/or joining a gel with a substrate of a compatible material according to one or more of the previous claims, **characterised by** the fact said mould has a vacuum system.

9. Method for coupling and/or joining a gel with a substrate of a compatible material according to one or more of the previous claims, **characterised by** the fact said sheet of compatible material is a film made of a thermoplastic material 25-150 microns thick and preferably a thick of between 50-100 microns.

## Patentansprüche

1. Verfahren zum Koppeln und/oder Verbinden eines SilikonGels mit einer Folie aus thermoplastischem Material, das als Substrat eines kompatiblen Materials ist, **dadurch gekennzeichnet, daß** es auf einer speziellen Form haftet, an dem a eine Folie aus thermoplastischem Material angeordnet ist, das ein Silikongel auf eine Temperatur zwischen 60° und 120° erhitzt, passend für die Erweichungsverformung der Folie aus thermoplastischem Material und durch den Umstand, dass das Gel eine Härte im Bereich von 5 Sh00 bis 5 ShA aufweist.

2. Verfahren zum Koppeln und/oder Verbinden eines Gels mit einem Substrat aus einem kompatiblen Material nach Anspruch 1, **dadurch gekennzeichnet, daß** es mit einem Gießverfahren mit den folgenden Schritten stattfindet:
a. Das Erhitzen des Silikongels
b. Das Positionieren der Folie an der Form, um thermogeformt zu werden
c. Mögliche Verwendung eines Vakuums
d. Gießen des erhitzten Silikons auf die Folie
e. Mögliche Abdeckung der Gussoberfläche mit einem anderen Film und luftdichter Abdichtung der Umfangsränder mit einer thermogeformten Folie.

3. Verfahren zum Koppeln und/oder Verbinden eines Gels mit einem Substrat aus einem kompatiblen Material nach Anspruch 1, **dadurch gekennzeichnet, daß** es mit einem Gießverfahren mit den folgenden Schritten stattfindet:
a. Einfügen von zwei thermoplastischen Folien zwischen der Form und dem Gegenstück, von denen jede eine Taschenwand bilden
b. Schließen der Form
c. Das Erhitzen des Silikongels
d. Mögliche Verwendung eines Vakuums
e. Einspritzen des heißen Silikongels zwischen die beiden Folien
f. Mögliche Schließung der Ränder der beiden Folien
g. Entformung der bereits thermogeformten Tasche
h. Mögliches Schließen der Taschenränder durch Versiegeln.

4. Verfahren zum Koppeln und/oder Verbinden eines Gels mit einem Substrat aus einem kompatiblen Material nach einem oder mehreren der vorhergehenden Ansprüche, das **dadurch gekennzeichnet ist, daß** das Gel eine Härte zwischen 120 (¼ Kegel, 22,5 Gramm ASTM D5D 217D 937-Verfahren) und 80 Eindringungspunkte hat.

5. Verfahren zum Koppeln und/oder Verbinden eines Gels mit einem Substrat aus einem kompatiblen Material nach einem oder mehreren der vorhergehenden Ansprüche, das **dadurch gekennzeichnet ist, daß** die genannte Temperatur zwischen 80° and 100° liegt.

6. Verfahren zum Koppeln und/oder Verbinden eines Gels mit einem Substrat aus einem kompatiblen Material nach einem oder mehreren der vorhergehenden Ansprüche, das **dadurch gekennzeichnet ist, daß** das genannte Silikongel aus der wärmehärtenden Sorte besteht.

7. Verfahren zum Koppeln und/oder Verbinden eines Gels mit einem Substrat aus einem kompatiblen Material nach einem oder mehreren der vorhergehenden Ansprüche, das **dadurch gekennzeichnet ist, daß** das genannte Silikongel aus der zweikomponenten Sorte besteht.

8. Verfahren zum Koppeln und/oder Verbinden eines Gels mit einem Substrat aus einem kompatiblen Material nach einem oder mehreren der vorhergehenden Ansprüche, das **dadurch gekennzeichnet ist, dass** die genannte Form ein Vakuumsystem besitzt.

9. Verfahren zum Koppeln und/oder Verbinden eines Gels mit einem Substrat aus einem kompatiblen Material nach einem oder mehreren der vorhergehenden Ansprüche, das **dadurch gekennzeichnet ist, dass** die genannte Folie des kompatiblen Materials eine Folie aus einem thermoplastischen Material ist, das 25-150 Mikrometer dick ist und vorzugsweise eine Dicke von zwischen 50 bis 100 Mikron hat.

## Revendications

1. Méthode d'accouplement et/ou d'union de gel silicone avec une feuille de matériel thermoplastique comme substrat de matériel compatible caractérisé du fait d'unir à la feuille de matériel thermoplastique disposé sur un moule approprié, le gel silicone réchauffé à une température compatible au ramollissement par la déformation de ladite feuille de matériel thermoplastique et du fait que ledit gel a une dureté comprise dans une gamme entre 5 Sh00 et 5 ShA.

2. Méthode d'accouplement et/ou d'union de gel avec un substrat de matériel compatible selon la revendication 1 **caractérisé par** le fait d'être réalisé par coulée selon les étapes suivantes :
a. réchauffement du gel silicone ;
b. positionnement de la feuille de thermoformage sur le moule ;
c. application éventuelle de vide ;
d. coulée dudit gel silicone réchauffé sur ladite feuille ;
e. éventuelle couverture de la superficie de coulée avec un autre film et soudure des bords de manière étanche avec le film thermoformé.

3. Méthode d'accouplement et/ou d'union de gel avec un substrat de matériel compatible selon la revendication 1 **caractérisé par** le fait de se réaliser par injection utilisant un moule et un contre moule selon les étapes suivantes :
a. insertion, entre la moule et le contre moule, de deux films thermoplastiques vis-à-vis qui formeront chacun une paroi de la poche ;
b. fermeture du moule ;
c. réchauffement du gel silicone ;
d. éventuelle application de vide ;
e. injection de gel silicone chaud entre les deux films ;
f. éventuelle fermeture des bords des deux films ;
g. démoulage de la poche obtenue déjà thermoformée ;
h. éventuelle fermeture des bords de la poche par soudure.

4. Méthode d'accouplement et/ou d'union de gel avec un substrat de matériel compatible selon une ou plusieurs des revendications précédentes **caractérisée par le fait que** ledit gel présente une dureté comprise entre 120 points de pénétration (1/4 cône, 22,5 grammes. Méthode ASTM D5D 217D 937) et 80.

5. Méthode d'accouplement et/ou d'union de gel avec un substrat de matériel compatible selon une ou plusieurs des revendications précédentes caractérisée du fait que ladite température est comprise entre 80°C et 100°C.

6. Méthode d'accouplement et/ou d'union de gel avec un substrat de matériel compatible selon une ou plusieurs des revendications précédentes caractérisée du fait que ledit gel silicone est de type thermodurcissable.

7. Méthode d'accouplement et/ou d'union de gel avec un substrat de matériel compatible selon une ou plusieurs des revendications précédentes caractérisée du fait que ledit gel silicone est de type bi composant.

8. Méthode d'accouplement et/ou d'union de gel avec un substrat de matériel compatible selon une ou plusieurs des revendications précédentes caractérisée du fait que ledit moule est pourvu d'un système à vide.

9. Méthode d'accouplement et/ou d'union de gel avec un substrat de matériel compatible selon une ou plusieurs des revendications précédentes caractérisée du fait que ladite feuille de matériel compatible est un film de matériel thermoplastique d'une épaisseur comprise entre 25 et 150 micron et préférablement comprise entre 50 et 100 micron.
